# EUROPÄISCHE PATENTSCHRIFT

(11) **EP 2 782 950 B1**
(45) Veröffentlichungstag und Bekanntmachung des Hinweises auf die Patenterteilung: **08.06.2016**
(21) Anmeldenummer: 12788519.2
(22) Anmeldetag: 19.11.2012
(51) Int. Cl.: C08G 73/02, C08G 65/26

(54) **ALKOXYLIERTE POLYALKYLENPOLYAMINE**
ALKOXYLATED POLYALKYLENE POLYAMINES
POLYAMINES DE POLYALKYLÈNE ALCOXYLÉES

(30) Priorität: 25.11.2011 EP 11190807
(43) Veröffentlichungstag der Anmeldung: 01.10.2014
(73) Patentinhaber: BASF SE, 67056 Ludwigshafen am Rhein (DE)
(72) Erfinder: EBERT, Sophia, 68165 Mannheim (DE); SCHAUB, Thomas, 67433 Neustadt (DE); STRAUTMANN, Julia, 68163 Mannheim (DE); HÜFFER, Stephan, 67063 Ludwigshafen (DE)
(74) Vertreter: BASF IP Association
(86) Internationale Anmeldenummer: PCT/EP2012/072943
(87) Internationale Veröffentlichungsnummer: WO 2013/076024

(56) Entgegenhaltungen:
- WO-A1-86/05501
- WO-A1-97/23546
- US-A- 4 888 425
- US-A- 5 445 765
- RYOKO KAWAHARA ET AL: "N-Alkylation of Amines with Alcohols Catalyzed by a Water-Soluble Cp*Iridium Complex: An Efficient Method for the Synthesis of Amines in Aqueous Media", ADVANCED SYNTHESIS & CATALYSIS, Bd. 353, Nr. 7, 9. Mai 2011 (2011-05-09), Seiten 1161-1168, XP055055911, ISSN: 1615-4150, DOI: 10.1002/adsc.201000962
- JAKOB NORINDER ET AL: "Highly Efficient and Selective Catalytic N-Alkylation of Amines with Alcohols in Water", CHEMCATCHEM, Bd. 3, Nr. 9, 11. Juli 2011 (2011-07-11), Seiten 1407-1409, XP055055913, ISSN: 1867-3880, DOI: 10.1002/cctc.201100197
- NATALIA ANDRUSHKO ET AL: "Amination of Aliphatic Alcohols and Diols with an Iridium Pincer Catalyst", CHEMCATCHEM, Bd. 2, Nr. 6, 7. Juni 2010 (2010-06-07), Seiten 640-643, XP055026530, ISSN: 1867-3880, DOI: 10.1002/cctc.201000046
- TILLACK A ET AL: "A novel ruthenium-catalyzed amination of primary and secondary alcohols", TETRAHEDRON LETTERS, ELSEVIER, AMSTERDAM, NL, Bd. 47, Nr. 50, 11. Dezember 2006 (2006-12-11), Seiten 8881-8885, XP025003579, ISSN: 0040-4039, DOI: 10.1016/J.TETLET.2006.10.042 [gefunden am 2006-12-11]

## Beschreibung

### Die vorliegende Erfindung betrifft

spezielle alkoxylierte Polyalkylenpolyamine und deren Herstellung.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemä-ßen Gegenstandes nicht nur in der jeweils konkret angegebenen Kombination, sondern auch in anderen Kombinationen verwendbar sind, ohne den Rahmen der Erfindung zu verlassen. Bevorzugt bzw. ganz bevorzugt sind die Ausführungsformen der vorliegen-den Erfindung in denen alle Merkmale die bevorzugten bzw. ganz bevorzugten Bedeu-tungen haben.

Polyethylenimine sind wertvolle Produkte mit einer Vielzahl von unterschiedlichen Verwendungen. Beispielsweise werden Polyethylenimine eingesetzt: a) als Haftvermittler für Druckfarben für Laminatfolien; b) als Hilfsmittel (Adhäsion) zur Herstellung von mehrlagigen Komposit-Folien, wobei nicht nur unterschiedliche Polymerschichten, sondern auch Metallfolien kompatibilisiert werden; c) als Haftvermittler für Klebstoffe, beispielsweise in Verbindung mit Polyvinylalkohol, -butyrat, und -acetat und Styrol-Copolymeren, oder als Kohäsionspromotor für Etikettenklebstoffe; d) niedermolekulare Polyethylenimine können zudem als Vernetzer/Härter in Epoxidharzen und Polyurethanklebstoffen verwendet werden; e) als Primer in Lackanwendungen zur Verbesserung der Haftung auf Substraten wie Glas, Holz, Kunststoff und Metall; f) zur Verbesserung der Nasshaftung in Standard-Dispersionsfarben sowie zur Verbesserung der Instantan-Regenbeständigkeit von Anstrichfarben beispielsweise für Fahrbahn-Markierungen; g) als Komplexierungsmittel mit hohem Bindevermögen für Schwermetalle wie Hg, Pb, Cu, Ni und Flockungsmittel in der Wasserbehandlung/Wasseraufbereitung; h) als Penetrationshilfsmittel für aktive Metallsalz-Formulierungen im Holzschutz; i) als Korrosionsinhibitoren für Eisen und Buntmetalle; j) zur Immobilisierung von Proteinen und Enzymen. Für diese Anwendungen lassen sich auch andere Polyalkylenpolyamine, welche nicht vom Ethylenimin abgeleitet sind, einsetzen.

Polyethylenimine werden gegenwärtig durch die Homopolymerisation von Ethylenimin erhalten. Ethylenimin ist ein hochreaktives, korrosives und toxisches Zwischenprodukt, welches auf verschiedenen Wegen dargestellt werden kann (Aziridine, Ulrich Steuerle, Robert Feuerhake; in Ullmann's Encyclopedia of Industrial Chemistry, 2006, Wiley-VCH, Weinheim).

Im *β*-Chlorethylamin-Prozess wird Ethylenimin durch die Reaktion von *β*-Chlorethylamin mit NaOH erhalten. Dabei kann es zur ungewollten Polymerisation des *β*-Chlorethylamins durch HCl-Abspaltung kommen, welche sorgfältig vermieden werden muss. Nachteilig ist außerdem der Einsatz von zwei Äquivalenten NaOH und die Bildung des Koppelproduktes NaCl.

Im Dow-Prozess lässt sich das Ethylenimin durch Umsetzung von 1,2-Dichlorethan mit drei Äquivalenten Ammoniak erhalten. Nachteilig sind der Einsatz großer Mengen Ammoniak, die Bildung des Koppelproduktes Ammoniumchlorid, die Korrosivität des Reaktionsgemischs sowie Verunreinigungen des Produkts.

Beim Wencker-Prozess wird im ersten Schritt 2-Aminoethanol mit Schwefelsäure zu 2-Aminoethylhydrogensulfat umgesetzt. Aus diesem wird dann im zweiten Schritt durch Zugabe von zwei Äquivalenten NaOH das Ethylenamin erhalten. Auch hier ist der Einsatz von Schwefelsäure und NaOH sowie die Bildung des Koppelproduktes Natriumsulfat nachteilig.

Bei der katalytischen Dehydrierung von 2-Aminoethanol wird das Ethylenimin durch die katalytische Dehydrierung von 2-Aminoethanol in der Gasphase bei 250-450°C erhalten. Nachteilig an diesem Verfahren sind die aufwendige Produktaufarbeitung durch Destillation, der hohe Energiebedarf sowie die niedrige Katalysatorlebensdauer.

Neben den genannten Nachteilen bei den Verfahren zur Herstellung von Ethylenimin ist die Synthese von Polyethyleniminen ausgehend von dieser Ausgangsverbindung problematisch, da das hochreaktive, toxische und korrosive Ethylenimin gehandhabt werden muss. Ebenso muss sichergestellt werden, dass kein Ethylenimin in den erhaltenen Produkten bzw. Abwasserströmen verbleibt.

Für die Herstellung von nicht vom Aziridin abgeleiteten Polyalkylenpolyaminen -[(CH₂)ₓN]- mit Alkylengruppen > C₂ (x > 2) gibt es keine der Aziridinroute analoge Verfahren, wodurch es bisher keinen kostengünstigen Prozess zu deren Herstellung gibt.

Die homogen-katalysierte Aminierung von Alkoholen ist aus der Literatur für die Synthese von primären, sekundären und tertiären Aminen ausgehend von Alkoholen und Aminen bekannt, wobei in allen beschriebenen Ausführungen monomere Produkte erhalten werden.

In US 3,708,539 ist die Synthese von primären, sekundären und tertiären Aminen unter Verwendung eines Ruthenium-Phosphan-Komplexes beschrieben.

In Y. Watanabe, Y. Tsuji, Y. Ohsugi Tetrahedron Lett. 1981, 22, 2667-2670 wird über die Herstellung von Arylaminen durch die Aminierung von Alkoholen mit Anilin unter Verwendung von [Ru(PPh₃)₃Cl₂] als Katalysator berichtet.

In EP 0 034 480 A2 wird die Herstellung von N-Alkyl- oder N,N-Dialkylaminen durch die Reaktion von primären oder sekundären Aminen mit einem primären oder sekundären Alkohol unter Verwendung eines Iridium-, Rhodium-, Ruthenium-, Osmium-, Platin-, Palladium- oder Rheniumkatalysators offenbart.

In EP 0 239 934 A1 wird die Synthese von mono- und diaminierten Produkten ausgehend von Diolen wie Ethylenglykol und 1,3-Propandiol mit sekundären Aminen unter Verwendung von Ruthenium- und Iridiumphosphan-Komplexen beschrieben.

In K.I. Fujita, R. Yamaguchi Synlett, 2005, 4, 560-571 wird die Synthese von sekundären Aminen durch die Reaktion von Alkoholen mit primären Aminen sowie die Synthese cyclischer Amine durch die Reaktion von primären Aminen mit Diolen durch Ringschluß unter Verwendung von Iridiumkatalysatoren beschrieben.

In A. Tillack, D. Hollmann, K. Mevius, D. Michalik, S. Bähn, M. Beller Eur. J. Org. Chem. 2008, 4745-4750, in A. Tillack, D. Hollmann, D. Michalik, M. Beller Tetrahedron Lett. 2006, 47, 8881-8885, in D. Hollmann, S. Bähn, A. Tillack, M. Beller Angew. Chem. Int. Ed. 2007, 46, 8291-8294 sowie in M. Haniti, S.A. Hamid, C.L. Allen, G.W. Lamb, A.C. Maxwell, H.C. Maytum, A.J.A. Watson, J.M.J. Williams J. Am. Chem. Soc, 2009, 131, 1766-1774 werden Synthesen von sekundären und tertiären Aminen ausgehend von Alkoholen und primären bzw. sekundären Aminen unter Verwendung von homogenen Rutheniumkatalysatoren beschrieben.

Über die Synthese von primären Aminen durch die Umsetzung von Alkoholen mit Ammoniak unter Verwendung eines homogenen Rutheniumkatalysators wird in C. Gunanathan, D. Milstein Angew. Chem. Int. Ed. 2008, 47, 8661-8664 berichtet.

In unserer unveröffentlichten Anmeldung PCT/EP2011/058758 werden allgemeine Verfahren zur Herstellung von Polyalkylenpolyaminen durch katalytische Alkohol-Aminierung von Alkanolaminen oder von Di- oder Polyaminen mit Di- oder Polyolen beschrieben.

Alkoxylierte Polyamine wie beispielsweise alkoxylierte Polyethylenimine finden zahlreiche Verwendungen, beispielsweise als Waschmitteladditiv, Dispergiermittel, Textilhilfsmittel, Holzschutzmittel, Korrosionsschutzmittel. Beschrieben ist die Verwendung alkoxylierter Polyethylenimine beispielsweise in den Patentschriften: US4891260, US4647921, US4654043, und US4645611.

Aufgabe der vorliegenden Erfindung ist es, ein Verfahren zur Herstellung von alkoxylierten Polyalkylenpolyaminen zu finden, bei dem kein Aziridin eingesetzt wird, keine unerwünschten Koppelprodukte gebildet werden und Produkte einer gewünschten Kettenlänge erhalten werden.

Ausdrücke der Form Cₐ-C_{b} bezeichnen im Rahmen dieser Erfindung chemische Verbindungen oder Substituenten mit einer bestimmten Anzahl von Kohlenstoffatomen. Die Anzahl an Kohlenstoffatomen kann aus dem gesamten Bereich von a bis b, einschließlich a und b gewählt werden, a ist mindestens 1 und b immer größer als a. Eine weitere Spezifizierung der chemischen Verbindungen oder der Substituenten erfolgt durch Ausdrücke der Form Cₐ-C_{b}-V. V steht hierbei für eine chemische Verbindungsklasse oder Substituentenklasse, beispielsweise für Alkylverbindungen oder Alkylsubstituenten.

Im Einzelnen haben die für die verschiedenen Substituenten angegebenen Sammelbegriffe folgende Bedeutung:
C₁-C₅₀-Alkyl: geradkettige oder verzweigte Kohlenwasserstoffreste mit bis zu 50 Kohlenstoffatomen, beispielsweise C₁-C₁₀-Alkyl oder C₁₁-C₂₀-Alkyl, bevorzugt C₁-C₁₀-Alkyl beispielsweise C₁-C₃-Alkyl, wie Methyl, Ethyl, Propyl, Isopropyl, oder C4-C6-Alkyl, n-Butyl, sec-Butyl, tert.-Butyl, 1,1-Dimethylethyl, Pentyl, 2-Methylbutyl, 1,1-Dimethylpropyl, 1,2-Dimethylpropyl, 2,2-Dimethylpropyl, 1-Ethylpropyl, Hexyl, 2-Methylpentyl, 3-Methyl-pentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 2-Ethylbutyl, 1,1,2-Trimethylpropyl, 1,2,2-Trimethylpropyl, 1-Ethyl-1-methylpropyl, 1-Ethyl-2-methylpropyl, oder C₇-C₁₀-Alkyl, wie Heptyl, Octyl, 2-Ethyl-hexyl, 2,4,4-Trimethylpentyl, 1,1,3,3-Tetramethylbutyl, Nonyl oder Decyl sowie deren Isomere.
C₃-C₁₅-Cycloalkyl: monocyclische, gesättigte Kohlenwasserstoffgruppen mit 3 bis zu 15 Kohlenstoffringgliedern, bevorzugt C₃-C₈-Cycloalkyl wie Cyclopropyl, Cyclobutyl, Cyclopentyl, Cyclohexyl, Cycloheptyl oder Cyclooctyl sowie ein gesättigtes oder ungesättigtes cyclisches System wie z. B. Norbornyl oder Norbenyl.
Aryl: ein ein- bis dreikerniges aromatisches Ringsystem enthaltend 6 bis 14 Kohlenstoffringglieder, z. B. Phenyl, Naphthyl oder Anthracenyl, bevorzugt ein ein- bis zweikerniges, besonders bevorzugt ein einkerniges aromatisches Ringsystem.
Das Symbol "*" kennzeichnet im Rahmen der vorliegenden Erfindung bei allen chemischen Verbindungen die Valenz über die eine chemische Gruppe an eine andere chemische Gruppe angebunden ist.

Gegenstand der Erfindung sind alkoxylierte Polyalkylenpolyamine der allgemeinen Formeln (I) bis (V) bzw. alkoxylierte Polyalkylenpolyamine, die Strukturen der allgemeinen Formeln (I) bis (V) enthalten: 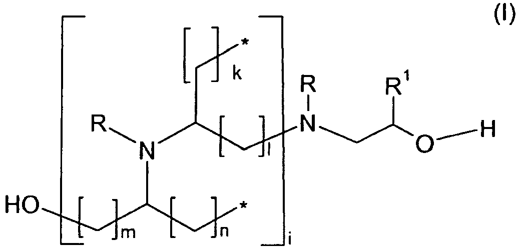 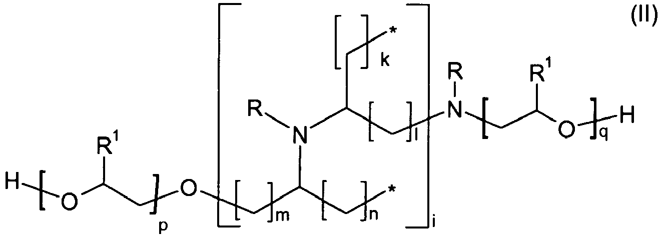 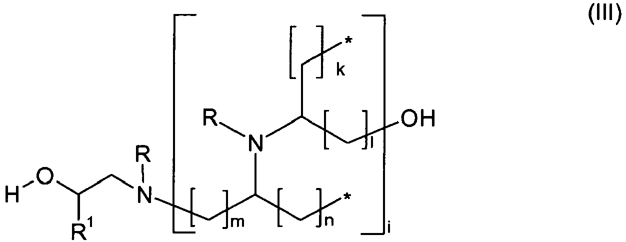 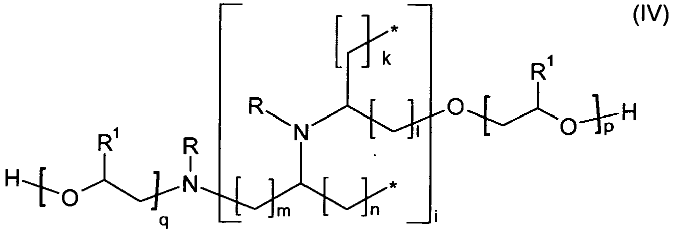 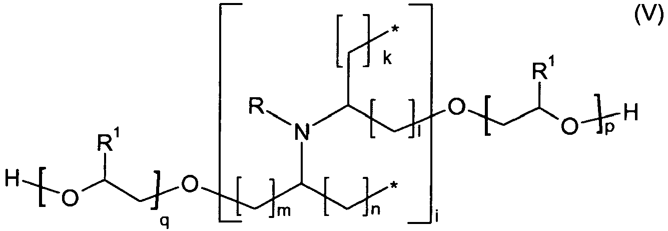 mit
- R: unabhängig voneinander, gleich oder verschieden H, C₁-C₅₀-Alkyl,
- R¹: unabhängig voneinander, gleich oder verschieden H, C₁-C₁₈ Alkyl, Aryl,
- I, m: unabhängig voneinander, gleich oder verschieden ganze Zahl aus dem Bereich von 1 bis 50, bevorzugt von 1 bis 30, besonders bevorzugt von 1 bis 20,
- n, k: unabhängig voneinander, gleich oder verschieden ganze Zahl aus dem Bereich von 0 bis 50, bevorzugt von 0 bis 30, besonders bevorzugt von 0 bis 20, i ganze Zahl aus dem Bereich von 3 bis 50000,
- p, q: unabhängig voneinander, gleich oder verschieden ganze Zahl aus dem Bereich von 0 bis 100, bevorzugt von 1 bis 50, besonders bevorzugt von 5 bis 25.

Die Erfindung betrifft auch die Verwendungen der alkoxylierten Polyalkylenpolyamine als a) Waschmitteladditive, b) Dispergiermittel, c) Textilhilfsmittel, (d) Holzschutzmittel, (e) Korrosionsschutzmittel. Beschrieben ist die Verwendung alkoxylierter Polyethylenimine beispielsweise in den Patentschriften: US4891260, US4647921, US4654043, und US4645611.

Ein weitere Gegenstand der Erfindung ist ein Verfahren zur Herstellung von alkoxylierten Polyalkylenpolyaminen, bei dem Polyalkylenpolyamine der allgemeinen Formeln (I') bis (III') bzw. Polyalkylenpolyamine enthaltend Strukturen der allgemeinen Formeln (I') bis (III'): 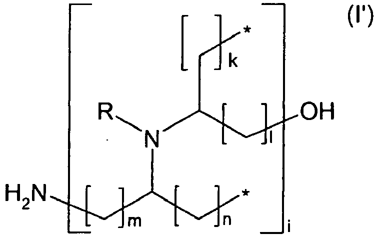 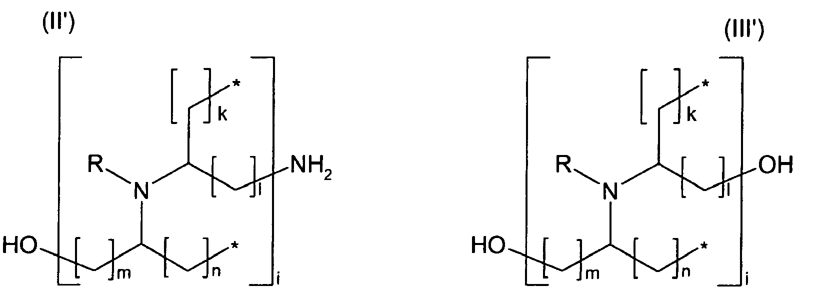 mit
- R: unabhängig voneinander, gleich oder verschieden H, C₁-C₅₀-Alkyl,
- I, m: unabhängig voneinander, gleich oder verschieden ganze Zahl aus dem Bereich von 1 bis 50, bevorzugt von 1 bis 30, besonders bevorzugt von 1 bis 20,

n, k unabhängig voneinander, gleich oder verschieden ganze Zahl aus dem Bereich von 0 bis 50, bevorzugt von 0 bis 30, besonders bevorzugt von 0 bis 20,
i ganze Zahl aus dem Bereich von 3 bis 50000,
mit Alkylenoxiden zu alkoxylierten Polyalkylenpolyaminen umgesetzt werden.

Die Polyalkylenpolyamine der allgemeinen Formeln (I') bis (III') werden durch Umsetzung mit Alkylenoxiden modifiziert. Dabei reagieren wahrscheinlich primäre oder sekundäre Aminogruppen unter Ringöffnung mit den Epoxiden. Die Herstellung alkoxylierter Amine wird beispielsweise in H. L. Sanders et. Al., Journal of the American Oil Chemists Society, 1969, 46, 167-170., beschrieben. Üblicherweise erfolgt die Alkoxylierung von Aminen und Polyaminen zweistufig: Zunächst wird soviel Alkylenoxid eingesetzt, dass ein durchschnittlicher Alkoxylierungsgrad pro NH-Funktion von 0,5 bis 1,5, bevorzugt von 0,75 bis 1,25 mol Alkylenoxid pro NH-Funktion erreicht wird. Dieser Schritt wird üblicherweise in Wasser als Lösungsmittel durchgeführt.

Der weitere Aufbau von Polyalkylenoxidketten erfolgt unter Basenkatalyse nach Entfernung des Lösungsmittels, insbesondere Wasser. Als basische Katalysatoren werden beispielsweise eingesetzt: Kaliumhydroxid, Natriumhydroxid, Kaliummethylat, oder Natriummethylat, bevorzugt Kaliumhydroxid, Natriumhydroxid.

Die Alkylenoxide enthalten in der Regel zwei oder mehr Kohlenstoffatome, bevorzugt von 2 bis 20 Kohlenstoffatome, insbesondere von 2 bis 12 Kohlenstoffatome.

Bei Verwendung von verschiedenen Alkylenoxiden kann der Aufbau der Polyalkylenoxidketten in Form von Blöcken oder statistisch erfolgen.

Es entstehen beispielsweise folgende Strukturen:

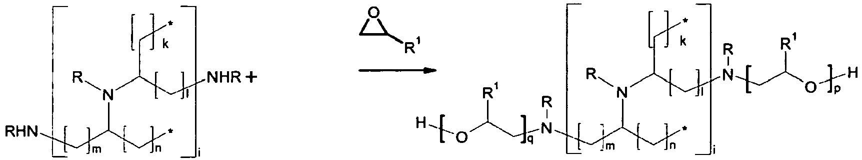

Falls die Polyalkylenpolyamine auch noch Hydroxyfunktionen tragen, werden diese bevorzugt in einem zweiten Schritt, während der basenkatalysierten Umsetzung mit Alkylenoxiden ebenfalls alkoxyliert, wie in der folgenden Skizze beispielhaft veranschaulicht ist:

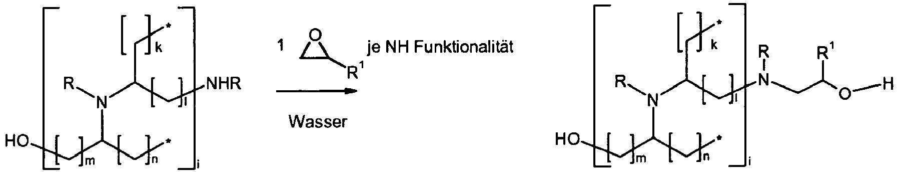

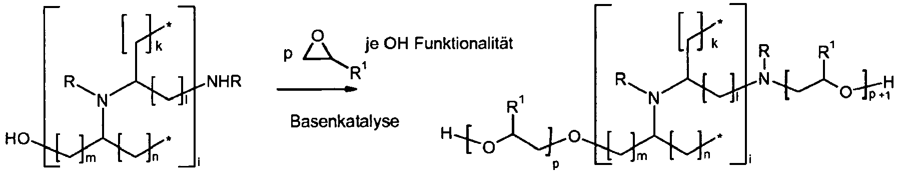

Als Alkylenoxide werden in Schritt (b) bevorzugt Ethylenoxid, Propylenoxid, 1,2-Butylenoxid, 2,3-Butylenoxid, Pentenoxid, Hexenoxid, Dodecenoxid eingesetzt (R¹ = H, C₁-C₁₈ Alkyl, Aryl). Der Alkoxylierungsgrad liegt hierbei in der Regel zwischen von 0,5 bis 100 Alkylenoxideinheiten/NH, bevorzugt zwischen von 1 bis 50, besonders bevorzugt zwischen von 5 bis 25/NH.

Die vorliegende Erfindung stellt Verfahren zur Herstellung von alkoxylierten Polyalkylenpolyaminen zur Verfügung, bei denen kein Aziridin eingesetzt wird, keine unerwünschten Koppelprodukte gebildet werden und Produkte einer gewünschten Kettenlänge erhalten werden.

Die Erfindung wird durch die Beispiele näher erläutert, ohne dass die Beispiele den Gegenstand der Erfindung einschränken.

### Beispiele

Die Bestimmung des Gehalts an primären Aminen, sekundären Aminen und tertiären Aminen (mg KOH/g Amin) erfolgt nach ASTM D2074-07.

Die Bestimmung der OH-Zahl erfolgt nach DIN 53240.

Die Bestimmung der Basenzahl erfolgt durch potentiometrische Titration mit Salzsäure in Anlehnung an ASTM D4739-11.

Die Aminzahl wird nach DIN 53176 bestimmt.

### Beispiel 1

131,2 g eines Polyalkylenpolyamins aus Ethanolamin und Diethylenamin, enthaltend 102 mg KOH/ g primäre Amine, 563 mg KOH/ g sekundäre Amine und 76 mg KOH/ g tertiäre Amine wurden in einem Autoklav mit 6,6 g Wasser bei 90°C vorgelegt. Der Reaktor wurde mehrfach mit Stickstoff gespült und die Temperatur wurde auf 120°C gesteigert. Bei dieser Temperatur wurden 78,9 g Ethylenoxid zudosiert und 2 h nachgerührt. Nach Abkühlen auf 80°C wurden 6,3 g wässrige Kaliumhydroxid-Lösung (50%ig) zugesetzt und unter Vakuum bei 120°C entwässert. Das Vakuum wurde mit Stickstoff aufgehoben und die Temperatur auf 140°C gesteigert. Bei 140°C wurden 710,3 g Ethylenoxid innerhalb von 7 h zudosiert. Anschließend wurde 5 h nachgerührt. Die Reaktionsmischung wurde auf 80°C abgekühlt und flüchtige Bestandteile wurden im Vakuum entfernt. Es wurden 930,0 g eines braunen, zähen Öls erhalten (OH-Zahl = 226,4 mg KOH/ g, Basenzahl = 61,9 mg KOH/ g, Aminzahl = 109,4 mg KOH/ g) Die Zusammensetzung entsprach laut 1H-NMR einem Polyalkylenpolyamin mit 10 EO-Einheiten/NH.

### Beispiel 2

161,4 g eines Polyalkylenpolyamins aus 1,2-Pentandiol und 1,3-Propandiamin, enthaltend 180 mg KOH/ g primäre Amine, 304 mg KOH/ g sekundäre Amine und 34 mg KOH/ g tertiäre Amine wurden in einem Autoklav mit 8,0 g Wasser bei 90°C vorgelegt. Der Reaktor wurde mehrfach mit Stickstoff gespült und die Temperatur wurde auf 100°C gesteigert. Bei dieser Temperatur wurden 84,0 g Ethylenoxid zudosiert und 1 h nachgerührt. Nach Entfernen der flüchtigen Bestandteile im Vakuum wurden 227g eines braunen Öls erhalten (OH-Zahl: 496,5 mgKOH/g).

134,9 g dieses Öls wurden mit 0,8 g Kalium-tert.-butylat in einem Autoklaven vorgelegt. Bei 130°C wurde der Reaktor mehrfach mit Stickstoff gespült und bei dieser Temperatur wurden 262,6 g Ethylenoxid aufgepresst. Nach 1 h Nachrührzeit wurden die flüchtigen Bestandteile im Vakuum entfernt und 390 g dunkelbraunes Öl, welches klar wasserlöslich ist, isoliert. Laut 1 H-NMR entsprach die Zusammensetzung einem Oligomer aus 1,3-Propandiamin + 1,2-Pentandiol) + 5 EO/OH.

303,3 g dieses Öls und 1,2 g Kalium-tert.-butylat wurden in einem Autoklaven vorgelegt und bei 130°C mehrmals mit Stickstoff inertisiert. Bei 130°C wurden 601,1g Ethylenoxid innerhalb von 3 h zudosiert. Nach 2 h Rühren bei 130°C wurden die flüchtigen Bestandteile im Vakuum entfernt und 900,3 g eines braunen Feststoffs isoliert (OH-Zahl: 115,5 mgKOH/g, Gesamtamin: 42,6 mgKOH/g, Tert. Amin: 5,6 mgKOH/g, Basenzahl: 37,6 mgKOH/g). Die Zusammensetzung entsprach einem Oligomer aus 1,3-Propandiamin + 1,2-Pentandiol + 20 EO/OH.

## Patentansprüche

1. Alkoxylierte Polyalkylenpolyamine der allgemeinen Formeln (I) bis (V) 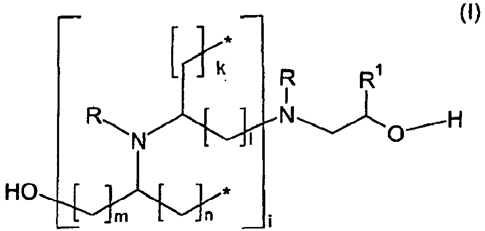 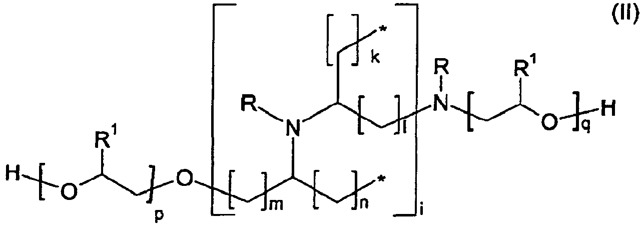 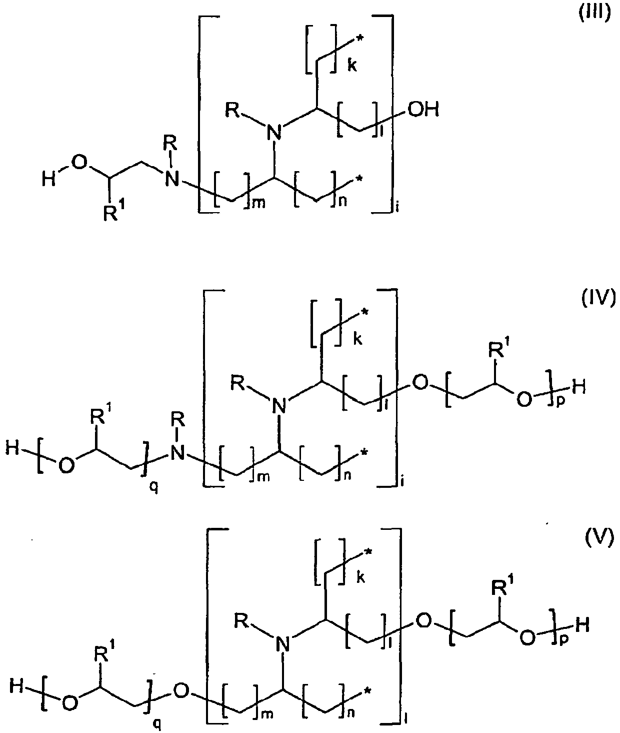 mit
R unabhängig voneinander, gleich oder verschieden H, C₁-C₅₀-Alkyl,
R¹ unabhängig voneinander, gleich oder verschieden H, C₁-C₁₈ Alkyl, Aryl,
I, m unabhängig voneinander, gleich oder verschieden ganze Zahl aus dem Bereich von 1 bis 50, bevorzugt von 1 bis 30, besonders bevorzugt von 1 bis 20,
n, k unabhängig voneinander, gleich oder verschieden ganze Zahl aus dem Bereich von 0 bis 50, bevorzugt von 0 bis 30, besonders bevorzugt von 0 bis 20,
i ganze Zahl aus dem Bereich von 3 bis 50000,
p, q unabhängig voneinander, gleich oder verschieden ganze Zahl aus dem Bereich von 0 bis 100, bevorzugt von 1 bis 50, besonders bevorzugt von 5 bis 25.

2. Verwendungen der alkoxylierten Polyalkylenpolyamine nach Anspruch 1 als
(a) Waschmitteladditive,
(b) Dispergiermittel,
(c) Textilhilfsmittel,
(d) Holzschutzmittel,
(e) Korrosionsschutzmittel.

3. Verfahren zur Herstellung von alkoxylierten Polyalkylenpolyaminen, **dadurch gekennzeichnet, dass** Polyalkylenpolyamine der allgemeinen Formeln (I') bis (III') 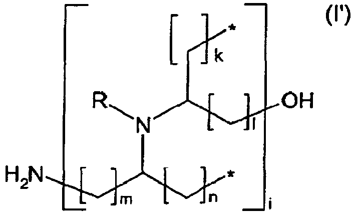 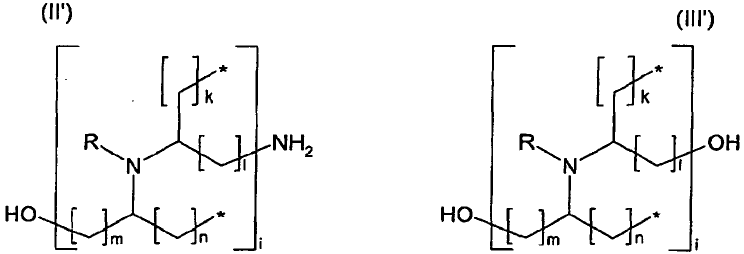 mit
R unabhängig voneinander, gleich oder verschieden H, C₁-C₅₀-Alkyl,
I, m unabhängig voneinander, gleich oder verschieden ganze Zahl aus dem Bereich von 1 bis 50, bevorzugt von 1 bis 30, besonders bevorzugt von 1 bis 20,
n, k unabhängig voneinander, gleich oder verschieden ganze Zahl aus dem Bereich von 0 bis 50, bevorzugt von 0 bis 30, besonders bevorzugt von 0 bis 20,
i ganze Zahl aus dem Bereich von 3 bis 50000,
mit Alkylenoxiden zu alkoxylierten Polyalkylenpolyaminen umgesetzt werden.

## Claims

1. An alkoxylated polyalkylenepolyamine of the general formulae (I) to (V) 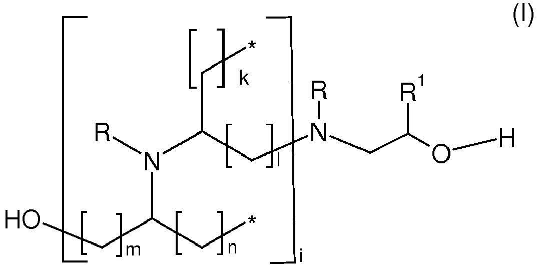 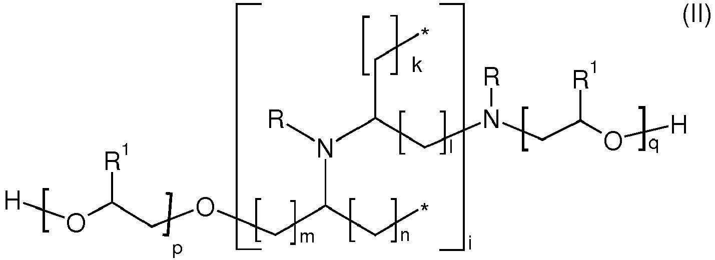 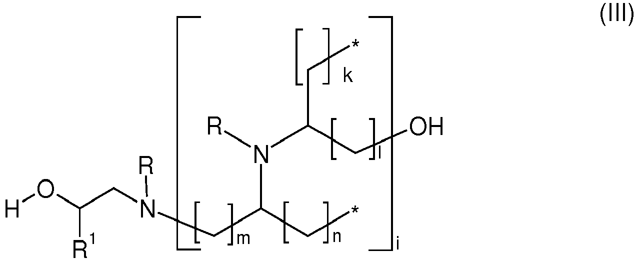 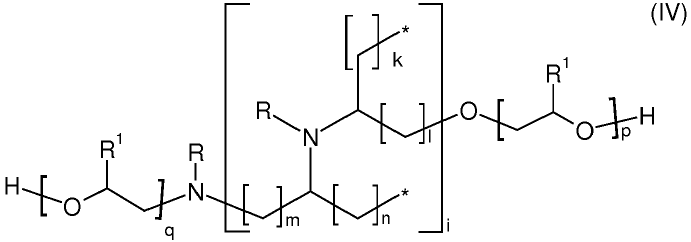 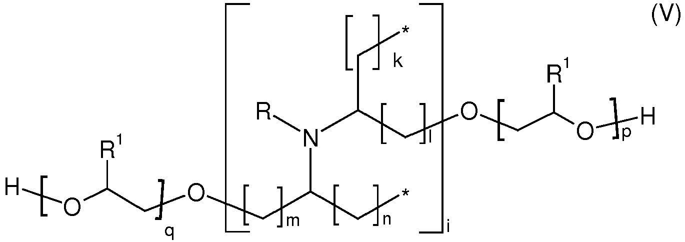 where
R independently of one another, are identical or different and are H, C₁-C₅₀-alkyl,
R¹ independently of one another, are identical or different and are H, C₁-C₁₈ alkyl, aryl,
1, m independently of one another, are identical or different and are an integer from the range from 1 to 50, preferably from 1 to 30, particularly preferably from 1 to 20,
n, k independently of one another, are identical or different and are an integer from the range from 0 to 50, preferably from 0 to 30, particularly preferably from 0 to 20,
i is an integer from the range from 3 to 50 000,
p, q independently of one another, are identical or different and are an integer from the range from 0 to 100, preferably from 1 to 50, particularly preferably from 5 to 25.

2. The use of the alkoxylated polyalkylenepolyamines according to claim 1 as
(a) detergent additives,
(b) dispersants,
(c) textile auxiliaries,
(d) wood protectants,
(e) corrosion inhibitors.

3. A process for the preparation of alkoxylated polyalkylenepolyamines, wherein polyalkylenepolyamines of the general formulae (I') to (III') 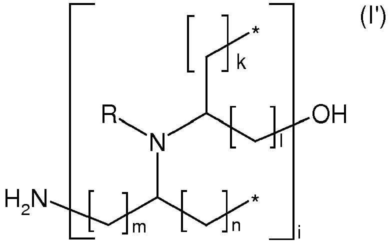 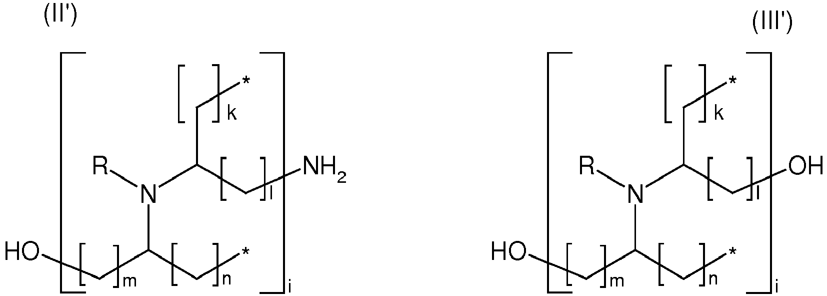 where
R independently of one another, are identical
l, m or different and are H, C₁-C₅₀-alkyl, independently of one another, are identical or different and are an integer from the range from 1 to 50, preferably from 1 to 30, particularly preferably from 1 to 20,
n, k independently of one another, are identical or different and are an integer from the range from 0 to 50, preferably from 0 to 30, particularly preferably from 0 to 20,
i is an integer from the range from 3 to 50 000,
are reacted with alkylene oxides to give alkoxylated polyalkylenepolyamines.

## Revendications

1. Polyalkylène-polyamines alcoxylées des formules générales (I) à (V) 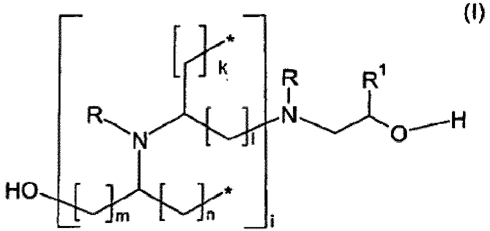 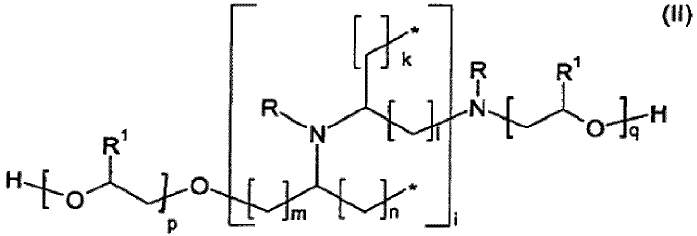 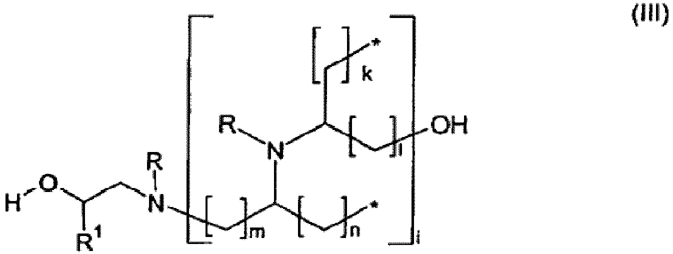 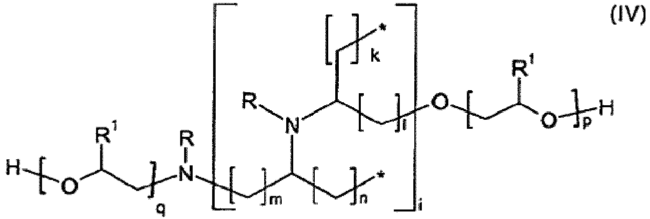 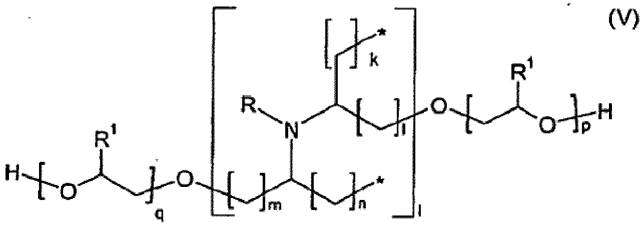 dans lesquelles
les R indépendamment les uns des autres, sont identiques ou différents, et représentent H, alkyle en C₁-C₅₀,
les R¹ indépendamment les uns des autres, sont identiques ou différents, et représentent H, alkyle en C₁-C₁₈, aryle,
1, m indépendamment les uns des autres, sont identiques ou différents, et représentent un nombre entier dans la plage allant de 1 à 50, de préférence de 1 à 30, de manière particulièrement préférée de 1 à 20, n, k indépendamment les uns des autres, sont identiques ou différents, et représentent un nombre entier dans la plage allant de 0 à 50, de préférence de 0 à 30, de manière particulièrement préférée de 0 à 20, i représente un nombre entier dans la plage allant de 3 à 50 000,
p, q indépendamment les uns des autres, sont identiques ou différents, et représentent un nombre entier dans la plage allant de 0 à 100, de préférence de 1 à 50, de manière particulièrement préférée de 5 à 25.

2. Utilisations des polyalkylène-polyamines alcoxylées selon la revendication 1 en tant que
(a) additifs pour détergents,
(b) dispersants,
(c) adjuvants pour textiles,
(d) agents protecteurs pour le bois,
(e) agents anticorrosion.

3. Procédé de fabrication de polyalkylène-polyamines alcoxylées, **caractérisé en ce que** des polyalkylène-polyamines des formules générales (I') à (III') 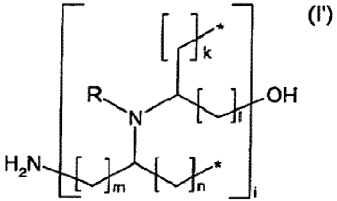 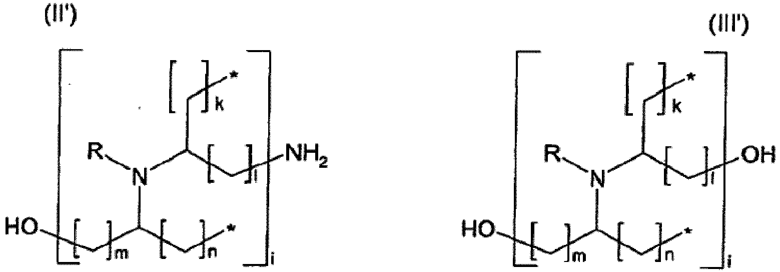 dans lesquelles
les R indépendamment les uns des autres, sont identiques ou différents, et représentent H, alkyle en C₁-C₅₀,
1, m indépendamment les uns des autres, sont identiques ou différents, et représentent un nombre entier dans la plage allant de 1 à 50, de préférence de 1 à 30, de manière particulièrement préférée de 1 à 20, n, k indépendamment les uns des autres, sont identiques ou différents, et représentent un nombre entier dans la plage allant de 0 à 50, de préférence de 0 à 30, de manière particulièrement préférée de 0 à 20, i représente un nombre entier dans la plage allant de 3 à 50 000,
sont mises en réaction avec des oxydes d'alkylène pour former des polyalkylène-polyamines alcoxylées.
